# EUROPÄISCHE PATENTSCHRIFT

(11) **EP 0 786 371 B1**
(45) Veröffentlichungstag und Bekanntmachung des Hinweises auf die Patenterteilung: **16.10.2002**
(21) Anmeldenummer: 97100936.0
(22) Anmeldetag: 22.01.1997
(51) Int. Cl.: B60N 2/08

(54) **Vorrichtung zur manuellen Längsverstellung eines Fahrzeugsitzes**
Device for manually adjusting the longitudinal position of a vehicle seat
Dispositif pour le réglage manuel en position longitudinal d'un siège de véhicule

(30) Priorität: 23.01.1996 DE 19602250
(43) Veröffentlichungstag der Anmeldung: 30.07.1997
(73) Patentinhaber: ISE Innomotive Systems Europe GmbH, 51702 Bergneustadt (DE)
(72) Erfinder: Benz, Jörg, 51588 Nümbrecht (DE)
(74) Vertreter: Fuchs Mehler Weiss & Fritzsche

(56) Entgegenhaltungen:
- EP-A- 0 349 918
- DE-A- 4 102 312
- DE-A- 4 321 720
- DE-C- 4 242 895
- FR-A- 2 655 923
- US-A- 5 172 882

## Beschreibung

Die vorliegende Erfindung betrifft eine Vorrichtung zur manuellen Längsverstellung eines Fahrzeugsitzes gemäß dem Oberbegriff des Anspruchs 1.

Eine derartige Vorrichtung ist beispielsweise aus der DE 42 42 895 C1 bekannt. Die genannte Vorrichtung weist vier Zähne in Form von einzeln vertikal beweglichen Nocken auf, deren Halterung an der Oberschiene des Sitzes befestigt ist. Die vier Nocken sind einzeln federbeaufschlagt und äquidistant angeordnet. Sie greifen in Ausnehmungen in der Unterschiene ein, wobei die Abstände der Ausnehmungen größer sind als die der Nokken untereinander. Fünf nebeneinander angeordnete Nocken hätten dieselbe Längsausdehnung wie vier Ausnehmungen. Die Durchmesser der Ausnehmungen sind etwas größer als die der Nocken, so daß in jeder Verriegelungsstellung jeweils zwei der Nocken in Ausnehmungen einrasten können. Es handelt sich dabei immer um zwei benachbarte Nocken bzw. den ersten und vierten. Die Einstellung der Längsverstellung ist also feiner, als es nach dem Abstand der Nocken zueinander den Anschein macht.

Eine derartig feine Einstellungsmöglichkeit ist auf jeden Fall wünschenswert, damit der Fahrer bzw. der Fahrgast im Fahrzeug die Längsposition seines Sitzes möglichst individuell einstellen kann. Da aber immer zwei der vier Nocken für eine Verriegelung der Längsverstellung benötigt werden, ist bei Beschädigung eines der Nocken jede zweite Verriegelungsposition spiel behaftet, da diese Verriegelungsposition von nunmehr nur einem Nocken gehalten werden muß, welcher aber nur mit Spiel in die zugehörige Ausnehmung ragt.

Die Aufgabe der vorliegenden Erfindung besteht daher darin, eine Vorrichtung zur manuellen Längsverstellung eines Fahrzeugsitzes zu schaffen, welche ähnlich feinstufige Schritte erlaubt, aber bei Beschädigung eines der Zähne bzw. Nocken trotzdem eine spielfreie Einstellung der Längsposition des Fahrzeugsitzes ermöglicht.

Diese Aufgabe wird gelöst in Verbindung mit den kennzeichnenden Merkmalen des Anspruchs 1. Das Prinzip der vorliegenden Erfindung besteht also darin, daß alle Zähne gemeinsam in entsprechende Ausnehmungen einrasten. Bei Beschädigung eines der Zähne können die übrigen Zähne weiterhin ihre Aufgabe erfüllen, da die Abstände der Zähne untereinander und die der Ausnehmungen untereinander gleich sind.

Eine Federbeaufschlagung eines Verriegelungshebels, welcher die Federkraft auf ein Sperrglied ausübt, bietet die Möglichkeit einer platzsparenden Anordnung des Verriegelungshebels im Sperrglied, wobei die zugehörige Feder im Inneren des verwendeten Führungsrahmens angebracht werden kann.

Bei Verwendung eines am Verriegelungshebel angebrachten Nokkens, welcher auf eine Rampe am Sperrglied auffährt, ergibt sich dann der Vorteil einer selbstverstärkenden Verriegelung. Bei Abnutzung des Nockens kann der Hebel von der Feder etwas weiter auf die Rampe aufgeschoben werden, wobei sich eine automatische Nachstellung dieser Verriegelung bei Abnutzung des Nockens oder der Rampe ergibt.

Damit die bei der Verriegelung eingestellte Spielfreiheit der Vorrichtung bestehen bleibt, auch wenn der Verriegelungshebel manuell umgeschwenkt wird und die ihn beaufschlagende Feder außer Wirkung gesetzt ist, empfiehlt sich die Beaufschlagung des Sperrgliedes mit einer zusätzlichen Feder, welche am Führungsrahmen angreift und direkt auf das Sperrglied einwirkt. Die Zähne des Sperrgliedes bleiben auf diese Weise im Eingriff mit den Ausnehmungen an der zweiten Schiene, bis der Verriegelungshebel direkt auf das Sperrglied einwirkt und es aus seiner Verriegelungsstellung abhebt.

Zur Gestaltung der Ausnehmungen, in welche die Zähne eingreifen, bieten sich vielfältige Möglichkeiten. Die Ausnehmungen können beispielsweise durch Zwischenräume einer an der zweiten Schiene angebrachten Verzahnung gebildet sein, wobei diese die Ausnehmungen tragende Verzahnung von einer Zahnstange gebildet sein kann, welche an der zweiten Schiene befestigt ist oder aber von Zahnsegmenten, welche an die zweite Schiene angeformt sind. Es können aber auch in die zweite Schiene selbst Ausnehmungen gesetzt sein, die eine Anbringung einer separaten Zahnstange oder einer anderen Verzahnung erübrigen.

Eine nähere Erläuterung der Erfindung erfolgt nun anhand der Beschreibung von acht Figuren.
- Fig. 1: zeigt einen Längsschnitt durch eine erfindungsgemäße Vorrichtung zur Längsverstellung eines Fahrzeugsitzes.
- Fig. 2: zeigt einen Querschnitt durch eine derartige Vorrichtung.
- Fig. 3 und 4: zeigen alternative Ausführungen zur Anbringung von Ausnehmungen an einer Unterschiene
- Fig. 5 bis 8: zeigen Möglichkeiten zur Befestigung eines Führungsrahmens an einer Oberschiene.

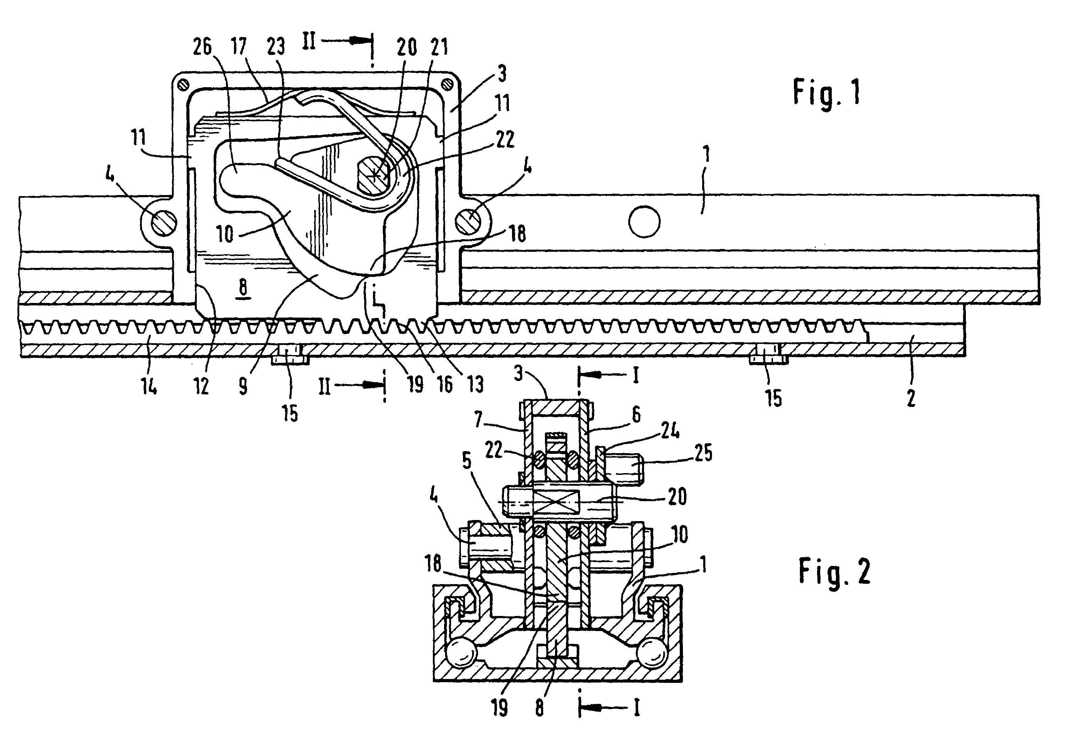

Die Darstellung eines Längsschnittes durch eine Verstellvorrichtung gemäß Fig. 1 zeigt eine Oberschiene 1, welche längsverschiebbar zu einer Unterschiene 2 parallel zu dieser angeordnet ist. An der Oberschiene 1 ist ein Führungsrahmen 3 mittels zweier Bolzen 4 festgenietet. Wie sich in Zusammenschau mit dem Querschnitt nach Fig. 2 ergibt, sind die Bolzen 4 durch die seitlichen Schenkel des im wesentlichen U-förmigen Profils der Oberschiene 1 geführt. Der Führungsrahmen 3 ist mit zwei Abdeckplatten 6 und 7 versehen, welche die Verstellvorrichtung vor Verschmutzung schützen und die seitliche Führung der im Führungsrahmen 3 angeordneten Funktionselemente übernehmen. Innerhalb des Führungsrahmens 3 befindet sich ein Sperrglied 8, durch welches eine Öffnung 9 geführt ist, in welcher ein Verriegelungshebel 10 angeordnet ist. Das Sperrglied 8 hat eine im wesentlichen rechteckige Außenkontur, wobei es in Schienenlängsrichtung mit angeformten Vorsprüngen 11 versehen ist, welche zur vertikalen Führung innerhalb des Führungsrahmens 3 dienen und verhindern, daß das Sperrglied 8 nach unten aus dem Führungsrahmen 3 herausfällt. Das Sperrglied 8 ragt zur Unterschiene 2 hin aus einer Öffnung 12 des Führungsrahmens 3. Die Öffnung 12 besitzt die Längsausdehnung des Sperrgliedes 8 ohne die Vorsprünge 11. Hierdurch ist gewährleistet, daß die Vorsprünge 11 das Sperrglied 8 innerhalb des Führungsrahmens 3 halten, auch wenn das Sperrglied 8 noch nicht im Eingriff mit der Unterschiene 2 steht.

Zur Verriegelung einer eingestellten Längsposition zwischen Oberschiene 1 und Unterschiene 2 weist das Sperrglied 8 über einen Teil seiner Länge an seiner Unterseite eine Mehrzahl von Zähnen auf, hier sechs Zähne 13. Sie sind in Form und Abstand der Kontur einer Zahnstange 14 angepaßt, welche an der Unterschiene 2 mittels Nieten 15 befestigt ist. Die Zähne 13 des Sperrgliedes 8 treffen also jeweils auf entsprechende Ausnehmungen 16 in der Zahnstange 14. Die Verzahnung kann dabei sehr fein gewählt werden, da immer eine Vielzahl von Zähnen in entsprechende Ausnehmungen eingreift, wodurch auch bei einer feinen Verzahnung erhebliche Längskräfte aufgenommen werden können. Das Sperrglied 8 ist innerhalb des Führungsrahmens 3 von einer Blattfeder 17 in Richtung auf die Unterschiene 2 hin beaufschlagt. Die Blattfeder 17 ist in entspannter Stellung gewölbt, wobei ihre Wölbung sich am Führungsrahmen 3 abstützt und ihre Enden am Sperrglied 8. Hierdurch drückt sie das Sperrglied 8 abwärts.

Der Verriegelungshebel 10 weist einen Nocken 18 auf, welcher im wesentlichen abwärts weist und mit einer in der Begrenzungskontur der Öffnung 9 angelegten Rampe 19 zusammenwirkt. Diese Rampe 19 ist an der Unterkante der Öffnung 9 angeordnet. Der Verriegelungshebel 10 ist um eine bezüglich des Führungsrahmens 3 starre Achse 20 schwenkbar. Durch die Achse 20 verläuft ein mit dem Verriegelungshebel 10 formschlüssig verbundener Bolzen 21, welcher durch die Abdeckplatten 6 und 7 hindurchgeführt ist und so drehbar in seiner Position gehalten wird. Auch der Verriegelungshebel 10 wird von einer Feder 22 beaufschlagt, welche sich an der Oberkante des Führungsrahmens 3 abstützt. Die Feder 22 weist drei Biegungen auf, von denen die mittlere Biegung eine Art Sattel 23 auf dem Verriegelungshebel 10 bildet und die Biegeachse der beiden seitlichen Biegungen senkrecht zu der der mittleren Biegung verläuft. Die beiden seitlichen Biegungen bilden zwei parallel verlaufende, U-förmige Konturen, von denen sich jede auf einer Seite des Verriegelungshebels 10 befindet und um den Bolzen 21 herumgeführt ist. Die Enden der Feder 22 liegen dann an der Oberkante des Führungsrahmens 3 an, so daß der Sattel 23 den Verriegelungshebel 10 abwärts drückt und der Nocken 18 auf die Rampe 19 auffährt.

Wie aus Fig. 2 weiterhin ersichtlich ist, ist formschlüssig am Bolzen 21 ein Betätigungshebel 24 mit einem Lagerbolzen 25 H befestigt. Auf diese Weise kann von außerhalb des Führungsrahmens 3 der Verriegelungshebel 10 umgeschwenkt werden, so daß der Nocken 18 sich von der Rampe 19 entfernt. In dieser Position bleibt das Sperrglied 8 mit seinen Zähnen 13 weiterhin im Eingriff mit der Zahnstange 14, da die Blattfeder 17 trotz der Aufhebung der Wirkung der Feder 22 für Spielfreiheit des Sperrgliedes 8 sorgt. Erst wenn das äußere Ende 26 des Verriegelungshebels 10 an den oberen Rand der Öffnung 9 stößt und bei weiterer Verschwenkung des Verriegelungshebels 10 das Sperrglied 8 anhebt, lösen sich die Zähne 13 aus den Ausnehmungen 16 der Zahnstange 14. Jetzt ist eine Längsverschiebung der Oberschiene 1 bezüglich der Unterschiene 2 möglich. Wird der Lagerbolzen 25 des Betätigungshebels 24 losgelassen, so rastet das Sperrglied 8 aufgrund seiner Federbeaufschlagung automatisch in entsprechende Ausnehmungen der Zahnstange 14 an anderer Stelle ein. Der Nocken 18 des Verriegelungshebels 10 fährt wieder auf seine Rampe 19 auf, wobei sich ein selbstverstärkender Effekt dadurch ergibt, daß die Feder 22 den Verriegelungshebel 10 immer gerade so weit drückt, wie es die Rampe 19 erlaubt und eine umso stärkere Vorspannung des Sperrgliedes erzielt, je weiter der Nocken 18 aufgeschoben wird. Bei einer Abnutzung des Nockens 18 durch Abrieb hat der Verriegelungshebel 10 mit seinem Ende 26 noch genügend Spiel innerhalb der Öffnung 9, um zum Spielausgleich sich ein bißchen weiter in die Verriegelungsstellung zu drehen.

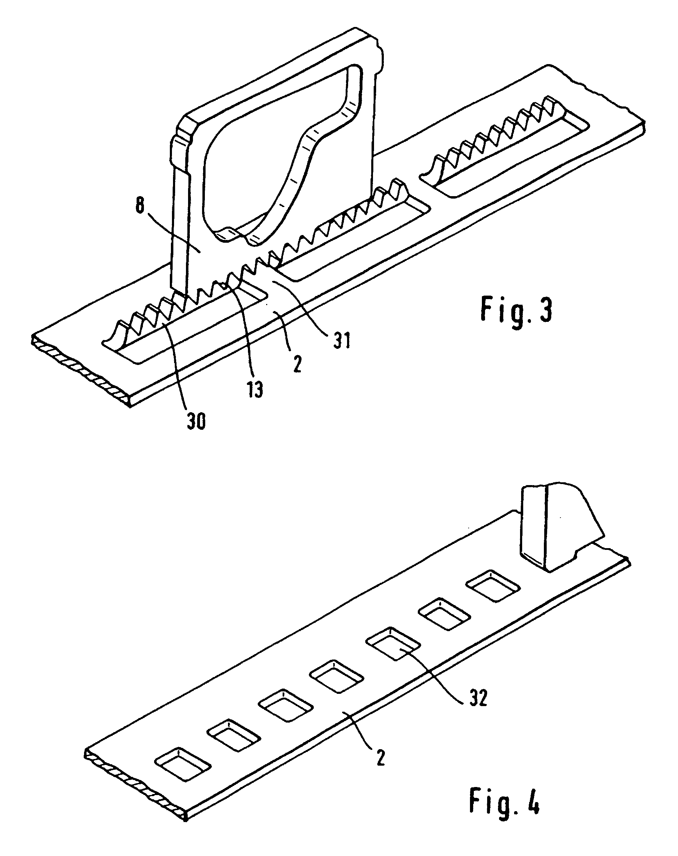

Fig. 3 zeigt eine Alternative zu einer Zahnstange 14 nach Fig. 1. In Fig. 3 ist die Unterschiene 2 aus Blech gefertigt, so daß es möglich ist, aus Blech eine Verzahnung 30 zu stanzen, deren Zwischenräume die Ausnehmungen bilden, in welche die Zähne 13 des hier nur angedeuteten Sperrgliedes 8 eingreifen. Es ist dabei nicht erforderlich, die Verzahnung 30 durchgehend über die gesamte Länge der Unterschiene 2 aufzubiegen. Es reichen entsprechende Segmente aus, da das Sperrglied 8 mit einer Vielzahl von Zähnen 13 versehen ist, wodurch auch Zwischenräume 31 zwischen den einzelnen Segmenten überbrückt werden können und trotzdem ein ausreichender Kraftschluß geboten wird.

Selbstverständlich ist es auch möglich, die Unterschiene 2 mit einer entsprechenden Perforation zu versehen, wobei die Löcher 32 dieser Perforation nicht ganz so feinstufig angelegt werden können wie aufgebogene Zahnsegmente gemäß Fig. 3.

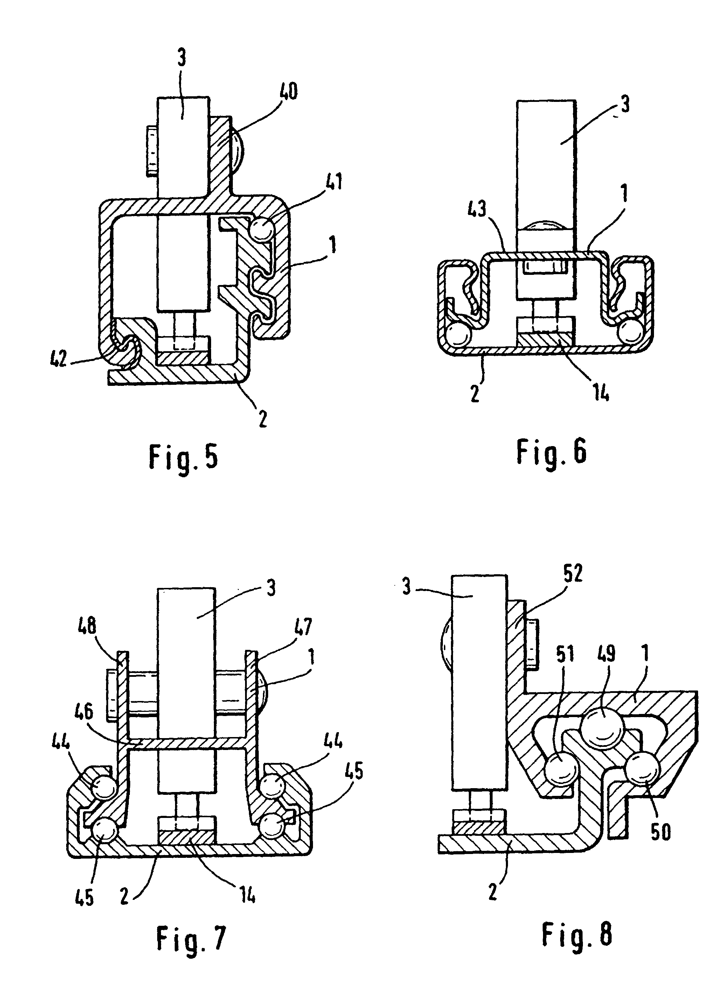

Die Fig. 5 bis 8 zeigen Möglichkeiten zur Befestigung des Führungsrahmens 3 an verschiedenen Schienenprofilen. In Fig. 5 ist eine asymmetrische Anordnung von Oberschiene 1 und Unterschiene 2 gezeigt, wobei die Oberschiene 1 nach oben einen in ihrer Längsrichtung verlaufenden Flansch 40 aufweist, an welchem der Führungsrahmen 3 durch einen quer zur Erstreckungsachse der Schienen geführten Niet befestigt ist. Oberschiene 1 und Unterschiene 2 sind in diesem Ausführungsbeispiel aus Strangpreßprofilen gefertigt und weisen lediglich an einer Stelle eine Kugellagerung 41 auf. Zusätzlich besitzt diese Schienenkonstruktion eine Gleitführung 42, welche diametral gegenüberliegend zur Kugellagerung 41 angeordnet ist. An zwei weiteren Stellen umgreift die Oberschiene 1 Vorsprünge der Unterschiene 2, wodurch ein Ausklinken der Oberschiene 1 aus der Unterschiene 2 verhindert wird.

Fig. 6 zeigt alternativ eine symmetrische Anordnung von Oberschiene 1 und Unterschiene 2, wobei die beiden Schienen 1 und 2 aus Blech geformt sind. Zwar ist hier genauso wie in Fig. 5 die Verzahnung an der Unterschiene 2 durch eine Zahnstange 14 gebildet, was aber eine Verzahnung durch aufgebogene, gestanzte Zahnsegmente gemäß Fig. 3 nicht ausschließt. Die Oberschiene 1 hat das Profil eines einseitig offenen Rechteckes, dessen Enden seitlich nach außen gebogen sind. Der Boden 43 des Rechteckes weist nach oben, so daß sich der Führungsrahmen 3 an diesem Boden 43 befestigen läßt. Es versteht sich von selbst, daß am Ort des Führungsrahmens 3 die Oberschienen 1 jeweils eine Öffnung zur Durchführung des Führungsrahmens 3 aufweisen.

Dasselbe gilt für eine Anordnung gemäß Fig. 7, welche in ihrer symmetrischen Gestaltung der von Fig. 2 ähnelt. Im Unterschied zu Fig. 2 weist die Anordnung nach Fig. 7 auf beiden Seiten des Führungsrahmens 3 jeweils zwei Kugellagerungen 44 und 45 auf, während in Fig. 2 auf jeder Seite nur eine Kugellagerung und anstelle einer zweiten Kugellagerung eine Gleitführung vorhanden ist. Ansonsten besitzt auch die Oberschiene 1 nach Fig. 7 ein nach oben offenes Profil, wobei ein Verbindungssteg 46 zwischen zwei Seitenteilen 47 und 48 der Oberschiene 1 ein im wesentlichen H-förmiges Profil verleiht. Oberschiene 1 und Unterschiene 2 sind in diesem Ausführungsbeispiel wieder aus einem Strang gepreßt, wobei am Boden der Unterschiene 2 wiederum eine Zahnstange 14 befestigt ist.

In Fig. 8 sind Oberschiene 1 und Unterschiene 2 asymmetrisch angeordnet, wobei der Führungsrahmen 3 nicht zwischen, sondern neben den Kugellagerungen 49, 50 und 51 angeordnet ist. Hierdurch ergibt sich der Vorteil, daß in der Oberschiene 1 keine Öffnung zur Durchführung des Führungsrahmens 3 vorgesehen sein muß. Ein seitlicher, aufwärts gerichteter Flansch 52 ermöglicht auf einfache Weise die Befestigung des Führungsrahmens 3 mittels einer Vernietung.

## Patentansprüche

1. Vorrichtung zur manuellen Längsverstellung eines Fahrzeugsitzes, welche in entriegelter Stellung eine Relativbewegung zwischen einer sitzfesten Oberschiene (1) und einer fahrzeugfesten Unterschiene (2) erlaubt und in verriegelter Stellung eine derartige Relativbewegung sperrt, wobei in verriegelter Stellung eine Mehrzahl von an einer ersten Schiene (1) vertikal beweglich angebrachten Zähnen (13) in entsprechende Ausnehmungen (16,30,32) an der zweiten Schiene (2) eingreift, **dadurch gekennzeichnet, daß** alle vertikal beweglichen Zähne (13) einstückig mit einem Sperrglied (8) gefertigt sind, welches in einem an der ersten Schiene (1) befestigten Führungsrahmen (3) angeordnet ist, der zur zweiten Schiene (2) hin eine Öffnung (12) aufweist, durch welche die Zähne (13) ragen und innerhalb dessen das Sperrglied (8) von einer Federvorrichtung (17,22) zur zweiten Schiene hin beaufschlagt ist, wobei Zähne (13) und Ausnehmungen (16,30,32) jeweils dieselben Abstände untereinander aufweisen.

2. Vorrichtung nach Anspruch 1, **dadurch gekennzeichnet, daß** innerhalb des Sperrgliedes (8) ein manuell schwenkbarer Verriegelungshebel (10) angeordnet ist, dessen Schwenkachse (20) starr bezüglich des Führungsrahmens (3) ist, wobei eine einerseits am Führungsrahmen (3) und andererseits am Verriegelungshebel (10) angreifende erste Feder (22) den Verriegelungshebel (10) gegen das Sperrglied (8) in Richtung auf die zweite Schiene (2) drückt, wobei die Federwirkung bei manueller Verschwenkung des Verriegelungshebels (10) aufgehoben wird und der Verriegelungshebel (10) das Sperrglied (8) von der zweiten Schiene (2) entfernt.

3. Vorrichtung nach Anspruch 2, **dadurch gekennzeichnet, daß** am Verriegelungshebel (10) ein Nocken (18) angeformt ist, der durch die Federbeaufschlagung auf eine Rampe (19) am Sperrglied (8) auffährt, wobei die Rampe (19) eine Schwenkbewegung des Verriegelungshebels (10) nur bis zu einem bestimmten Grad zuläßt.

4. Vorrichtung nach einem der Ansprüche 1 bis 3, **dadurch gekennzeichnet, daß** eine zweite Feder (17), die einerseits am Führungsrahmen (3) und andererseits am Sperrglied (8) angreift, das Sperrglied (8) zur zweiten Schiene (2) hin beaufschlagt.

5. Vorrichtung nach einem der vorhergehenden Ansprüche, **dadurch gekennzeichnet, daß** die Ausnehmungen (16,30), in welche die Zähne (13) eingreifen, von Zahnzwischenräumen einer an der zweiten Schiene (2) befestigten Verzahnung gebildet werden.

6. Vorrichtung nach Anspruch 5, **dadurch gekennzeichnet, daß** die Verzahnung sich an einer Zahnstange (14) befindet.

7. Vorrichtung nach Anspruch 5, **dadurch gekennzeichnet, daß** die Verzahnung (30) einstückig mit der zweiten Schiene (2) gefertigt ist.

8. Vorrichtung nach Anspruch 7, **dadurch gekennzeichnet, daß** die die Verzahnung (30) tragende Schiene (2) aus Blech gefertigt ist und die Verzahnung von entsprechend gestanzten und rechtwinklig abgebogenen Zahnsegmenten gebildet ist.

9. Vorrichtung nach einem der Ansprüche 1 bis 4, **dadurch gekennzeichnet, daß** die Ausnehmungen (32), in welche die Zähne (13) eingreifen, von einer Lochung der zweiten Schiene (2) gebildet werden.

## Claims

1. Device for the manual longitudinal adjustment of a vehicle seat, which device, in the unlatched position, permits a relative movement between an upper rail (1) fixed to the seat and a lower rail (2) fixed to the vehicle and, in the latched position, blocks such a relative movement, in the latched position a plurality of teeth (13) fitted on a first rail (1) to be vertically movable engaging in corresponding recesses (16, 30, 32) on the second rail (2), **characterised in that** all of the vertically movable teeth (13) are manufactured in a single piece with a blocking member (8) arranged in a guide frame (3) which is secured to the first rail (1) and which has, towards the second rail (2), an opening (12) through which the teeth (13) project, and inside which frame the blocking member (8) is acted upon towards the second rail by a spring device (17, 22), the teeth (13) being arranged at the same distance from one another and the recesses (16, 30, 32) being arranged at the same distance from one another.

2. Device according to claim 1, **characterised in that** a manually pivotable latching lever (10) is arranged inside the blocking member (8) and its pivot axis (20) is rigid relative to the guide frame (3), a first spring (22), which acts on the one hand on the guide frame (3) and on the other hand on the latching lever (10), pressing the latching lever (10) against the blocking member (8) in the direction towards the second rail (2), the spring action being suspended during manual pivoting of the latching lever (10) and the latching lever (10) removing the blocking member (8) from the second rail (2).

3. Device according to claim 2, **characterised in that** a cam (18) is integrally formed on the latching lever (10) and, as a result of action by the spring, runs onto a ramp (19) on the blocking member (8), the ramp (19) permitting a pivoting movement of the latching lever (10) only to a specific degree.

4. Device according to any one of claims 1 to 3, **characterised in that** a second spring (17) which acts on the one hand on the guide frame (3) and on the other hand on the blocking member (8) acts on the blocking member (8) towards the second rail (2).

5. Device according to any one of the preceding claims, **characterised in that** the recesses (16, 30) in which the teeth (13) engage are formed by interdental spaces of a toothed arrangement secured to the second rail (2).

6. Device according to claim 5, **characterised in that** the toothed arrangement is located on a rack (14).

7. Device according to claim 5, **characterised in that** the toothed arrangement (30) is manufactured in a single piece with the second rail (2).

8. Device according to claim 7, **characterised in that** the rail (2) carrying the toothed arrangement (30) is manufactured from sheet-metal and the toothed arrangement is formed by suitably stamped toothed segments bent at right-angles.

9. Device according to any one of claims 1 to 4, **characterised in that** the recesses (32) in which the teeth (13) engage are formed by holes in the second rail (2).

## Revendications

1. Dispositif pour le réglage manuel en position longitudinale d'un siège de véhicule, qui permet dans la position déverrouillée un déplacement relatif entre un rail supérieur (1) fixé au siège et un rail inférieur (2) fixé au véhicule et, dans la position verrouillée, bloque un déplacement relatif de ce type, un grand nombre de dents (13) disposées de façon mobile verticalement sur un premier rail (1) s'engageant dans des évidements (16, 30, 32) appropriés sur le deuxième rail (2) dans la position verrouillée, **caractérisé en ce que** toutes les dents (13) mobiles verticalement sont fabriquées d'un seul tenant avec un organe de blocage (8), lequel est disposé dans un cadre de guidage (3) fixé sur le premier rail (1), qui présente en direction du deuxième rail (2) une ouverture (12), par laquelle les dents (13) dépassent, et cadre dans lequel l'élément de blocage (8) est sollicité par un dispositif à ressort (17, 22) en direction du deuxième rail, les dents (13) et les évidements (16, 30, 32) présentant respectivement les mêmes intervalles entre eux.

2. Dispositif selon la revendication 1, **caractérisé en ce qu'**à l'intérieur de l'élément de blocage (8) est disposé un levier de verrouillage (10) basculable manuellement, dont l'axe de pivotement (20) est fixe par rapport au cadre de guidage (3), un premier ressort (22) appliqué d'une part sur le cadre de guidage (3) et d'autre part sur le levier de verrouillage (10) appuyant le levier de guidage (10) contre l'élément de blocage (8) en direction du deuxième rail (2), l'effet de ressort étant supprimé en cas de basculement manuel du levier de verrouillage (10) et le levier de verrouillage (10) enlevant l'élément de blocage (8) du deuxième rail (2).

3. Dispositif selon la revendication 2, **caractérisé en ce que** sur le levier de verrouillage (10) est formée une came (18), qui avance sous l'effet de la sollicitation du ressort sur une rampe (19) disposée sur l'élément de blocage (8), la rampe (19) autorisant un mouvement de basculement du levier de verrouillage (10) seulement jusqu'à un certain degré.

4. Dispositif selon l'une quelconque des revendications 1 à 3, **caractérisé en ce qu'**un deuxième ressort (17), qui s'applique d'une part sur la cadre de guidage (3) et d'autre part sur l'élément de blocage (8), sollicite l'élément de blocage (8) en direction du deuxième rail (2).

5. Dispositif selon l'une quelconque des revendications précédentes, **caractérisé en ce que** les évidements (16,30), dans lesquels les dents (13) s'engagent, sont formés par des entredents d'une denture fixée sur le deuxième rail (2).

6. Dispositif selon la revendication 5, **caractérisé en ce que** la denture se trouve sur une crémaillère (14).

7. Dispositif selon la revendication 5, **caractérisé en ce que** la denture (30) est formée d'un seul tenant avec le deuxième rail (2).

8. Dispositif selon la revendication 7, **caractérisé en ce que** le rail (2) portant la denture (30) est fabriqué à base de tôle et la denture est formée de segments dentés découpés de façon appropriée et recourbés à angle droit.

9. Dispositif selon l'une quelconque des revendications 1 à 4, **caractérisé en ce que** les évidements (32), dans lesquels les dents (13) s'engagent, sont formés par une perforation du deuxième rail (2).
